# EUROPEAN PATENT APPLICATION

(11) **EP 0 992 905 A2**
(43) Date of publication of application: **12.04.2000**
(21) Application number: 99400553.6
(22) Date of filing: 08.03.1999
(51) Int. Cl.: G06F 11/00

(54) **Cache miss benchmarking**

(30) Priority: 06.10.1998 EP 98402455
(71) Applicant: TEXAS INSTRUMENTS INC., Dallas, Texas 75243 (US); TEXAS INSTRUMENTS FRANCE, 06271 Villeneuve Loubet Cédex (FR)
(72) Inventor: Buser, Mark L., Pittsburg, PA 15218 (US); Laurenti, Gilbert (nmi), 06570 Saint Paul de Vence (FR)
(74) Representative: Potter, Julian Mark

(57) **Abstract**

A processor core (102) is provided that is a programmable digital signal processor (DSP) with variable instruction length, offering both high code density and easy programming. Architecture and instruction set are optimized for low power consumption and high efficiency execution of DSP algorithms, such as for wireless telephones, as well as pure control tasks. A cache (814) located within a megacell on a single integrated circuit (800) is provided to reduce instruction access time. Performance monitoring circuitry (852) is included within the megacell and monitors selected signals to collect benchmark events. The performance monitoring circuitry can be interrogated via a JTAG interface (850). A cache miss signal (816) is provided by the cache to the performance monitoring circuitry in order to determine the performance of the internal cache. Windowing circuitry (824) within the megacell allows benchmark events to be collected during selected windows of execution.

## Description

### FIELD OF THE INVENTION

The present invention relates to digital microprocessors, and more particularly to monitoring the performance of digital microprocessors.

### BACKGROUND OF THE INVENTION

Microprocessors are general purpose processors which require high instruction throughputs in order to execute software running thereon, and can have a wide range of processing requirements depending on the particular software applications involved. A cache internal to the microprocessor may provide shorter instruction access times.

Known microprocessor debugging environments provide code profiling capability which allows the amount of cycles or instructions required to execute a specified routine or piece of code to be determined. However, direct visibility of a cache internal to the microprocessor is not provided. Therefore, cache performance cannot generally be determined.

Many different types of processors are known, of which microprocessors are but one example. For example. Digital Signal Processors (DSPs) are widely used, in particular for specific applications, such as mobile processing applications. DSPs are typically configured to optimize the performance of the applications concerned and to achieve this they employ more specialized execution units and instruction sets. Particularly in, but not exclusively, applications such as mobile telecommunications applications, it is desirable to provide ever increasing DSP performance while keeping power consumption as low as possible.

### SUMMARY OF THE INVENTION

Particular and preferred aspects of the invention are set out in the accompanying independent and dependent claims. Combinations of features from the dependent claims may be combined with features of the independent claims as appropriate and not merely as explicitly set out in the claims. The present invention is directed to improving the performance of processors, such as for example, but not exclusively, digital signal processors.

In accordance with a first aspect of the invention, there is provided a microprocessor that is a programmable digital signal processor (DSP), offering both high code density and easy programming. Architecture and instruction set are optimized for low power consumption and high efficiency execution of DSP algorithms, such as for wireless telephones, as well as pure control tasks. The microprocessor has an instruction buffer unit operable to decode a first instruction of the sequence of instructions and a program counter circuitry for providing a first instruction address that identifies the first instruction in the sequence of instructions to be decoded by the instruction buffer unit. A cache circuit operable to store a copy of the first instruction is connected to the program counter circuitry and further connected to the instruction bus, the cache circuit being operable to provide the first instruction to the instruction buffer in response to the first instruction address from the program counter circuitry or to otherwise assert a miss signal if the first instruction is not stored in the cache. Counting circuitry is operable to count a benchmark event each time the miss signal is asserted. Watchpoint circuitry is connected to the counting circuitry and is operable to enable and disable the counting circuitry.

In accordance with another aspect of the present invention, the counting circuitry comprises control circuitry operable to select from a plurality of performance indicia signals for counting as a benchmark event, wherein the miss signal is one of the plurality of performance indicia signals.

In accordance with another aspect of the present invention, the watchpoint circuitry is connected to the program counter circuitry and is operable to enable the counting circuitry in response to a second instruction address provided by the program counter circuitry.

In accordance with another aspect of the present invention, a method of operating a digital system is provided. A microprocessor is operable to execute a sequence of instructions by providing an instruction address that identifies a first instruction in a sequence of instructions to be decoded by an instruction buffer unit. providing a first instruction address that identifies a first instruction in the sequence of instructions to be decoded by an instruction buffer unit, accessing the first instruction from a cache circuit if the first instruction is present in the cache circuit or indicating that a cache miss event occurred if the first instruction is not present in the cache circuit and accessing the first instruction from another memory circuit, and decoding the first instruction of the sequence of instructions in the instruction buffer unit. The steps of providing, accessing and decoding are repeated to form a sequence of cache miss events. A selected set of benchmark events is counted to determine a measure of performance of the digital system, wherein a benchmark event is a cache miss event.

In accordance with another aspect of the present invention, the step of counting comprises beginning the step of counting in response to a first data value and stopping the step of counting in response to a second data value, such that the selected set of benchmark events occurs between the occurrence of the first data value and the occurrence of the second data value.

### BRIEF DESCRIPTION OF THE DRAWINGS

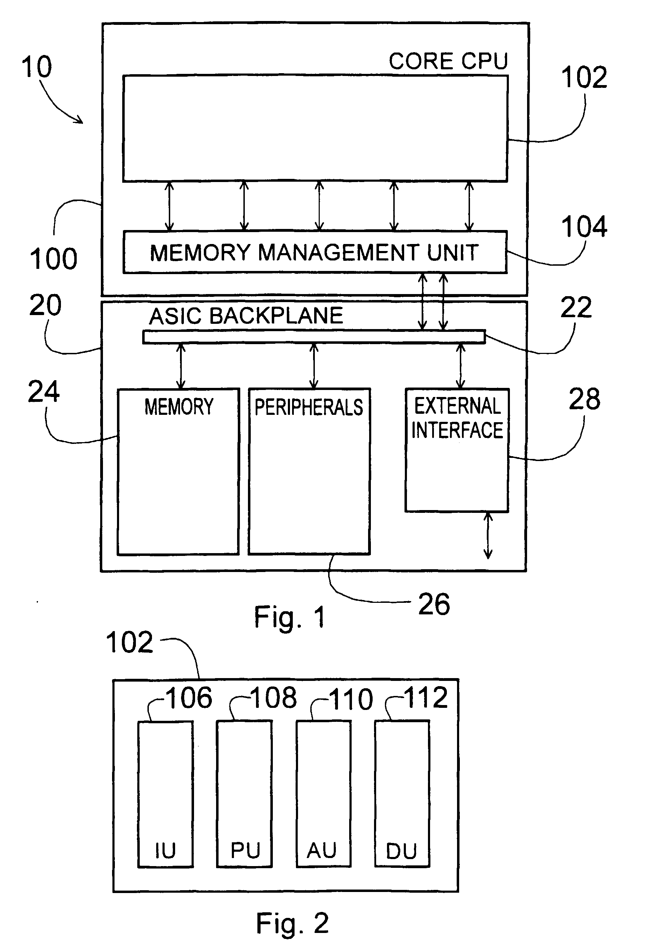

Particular embodiments in accordance with the invention will now be described, by way of example only, and with reference to the accompanying drawings in which like reference signs are used to denote like parts and in which the Figures relate to the processor of Figure 1, unless otherwise stated, and in which:
Figure 1 is a schematic block diagram of a digital system which includes a microprocessor in accordance with an embodiment of the invention;
Figure 2 is a schematic diagram of the processor core of Figure 1;
Figure 3 is a more detailed schematic block diagram of various execution units of the processor core;
Figure 4 is a schematic diagram of an instruction buffer queue and an instruction decoder of the processor;
Figure 5 is a schematic representation of the processor core for explaining the operation of the pipeline of the processor;
Figure 6 is a block diagram of the processor illustrating a memory management unit interconnected memory;
Figure 7 shows the unified structure of Program and Data memory spaces of the processor;
Figure 8 is a block diagram illustrating a digital system with the processor of Figure 1 and associated benchmarking circuitry, according to aspects of the present invention;
Figure 9 is a block diagram illustrating the benchmark circuitry of Figure 8;
Figure 10 is a block diagram illustrating the breakpoint/windowing circuitry of Figure 8;
Figure 11 is a block diagram of the cache of Figure 8;
Figure 12 is a more detailed block diagram of the cache of Figure 8;
Figure 13 illustrates the memory structure of the cache of Figure 8;
Figure 14 illustrates direct mapped cache organization;
Figure 15 is a block diagram illustrating an alternative embodiment of a digital system with the processor of Figure 1, according to aspects of the present invention;
Figure 16 is a schematic representation of an integrated circuit incorporating the processor;
Figure 17 is a schematic representation of a telecommunications device incorporating the processor of Figure 1.

### DESCRIPTION OF THE PREFERRED EMBODIMENTS

Although the invention finds particular application to Digital Signal Processors (DSPs), implemented, for example, in an Application Specific Integrated Circuit (ASIC), it also finds application to other forms of processors.

The basic architecture of an example of a processor according to the invention will now be described. Processor 100 is a programmable fixed point DSP core with variable instruction length (8 bits to 48 bits) offering both high code density and easy programming. Architecture and instruction set are optimized for low power consumption and high efficiency execution of DSP algorithms as well as pure control tasks, such as for wireless telephones, for example. Processor 100 includes emulation and code debugging facilities.

Figure 1 is a schematic overview of a digital system 10 in accordance with an embodiment of the present invention. The digital system includes a processor 100 and a processor backplane 20. In a particular example of the invention, the digital system is a Digital Signal Processor System 10 implemented in an Application Specific Integrated Circuit (ASIC). In the interest of clarity, Figure 1 only shows those portions of microprocessor 100 that are relevant to an understanding of an embodiment of the present invention. Details of general construction for DSPs are well known, and may be found readily elsewhere. For example, U.S. Patent 5,072,418 issued to Frederick Boutaud, et al, describes a DSP in detail. U.S. Patent 5,329,471 issued to Gary Swoboda, et al, describes in detail how to test and emulate a DSP. Details of portions of microprocessor 100 relevant to an embodiment of the present invention are explained in sufficient detail herein below, so as to enable one of ordinary skill in the microprocessor art to make and use the invention.

As shown in Figure 1, processor 100 forms a central processing unit (CPU) with a processor core 102 and a memory interface unit 104 for interfacing the processor core 102 with memory units external to the processor core 102.

Processor backplane 20 comprises a backplane bus 22, to which the memory management unit 104 of the processor is connected. Also connected to the backplane bus 22 is an instruction memory 24, peripheral devices 26 and an external interface 28.

It will be appreciated that in other examples, the invention could be implemented using different configurations and/or different technologies. For example, processor 100 could form a first integrated circuit, with the processor backplane 20 being separate therefrom. Processor 100 could, for example be a DSP separate from and mounted on a backplane 20 supporting a backplane bus 22, peripheral and external interfaces. The processor 100 could, for example, be a microprocessor rather than a DSP and could be implemented in technologies other than ASIC technology. The processor or a processor including the processor could be implemented in one or more integrated circuits.

Figure 2 illustrates the basic structure of an embodiment of the processor core 102. As illustrated, this embodiment of the processor core 102 includes four elements, namely an Instruction Buffer Unit (I Unit) 106 and three execution units. The execution units are a Program Flow Unit (P Unit) 108, Address Data Flow Unit (A Unit) 110 and a Data Computation Unit (D Unit) 112 for executing instructions decoded from the Instruction Buffer Unit (I Unit) 106 and for controlling and monitoring program flow.

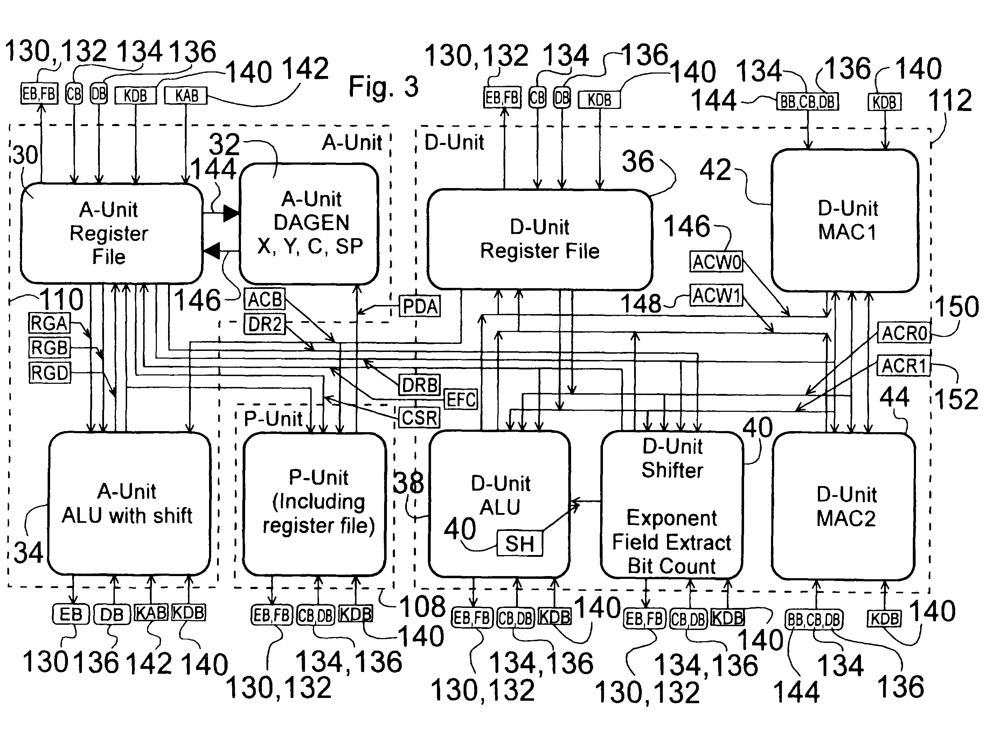

Figure 3 illustrates P Unit 108, A Unit 110 and D Unit 112 of the processor core 102 in more detail and shows the bus structure connecting the various elements of the processor core 102. The P Unit 108 includes, for example, loop control circuitry, GoTo/Branch control circuitry and various registers for controlling and monitoring program flow such as repeat counter registers and interrupt mask, flag or vector registers. The P Unit 108 is coupled to general purpose Data Write buses (EB,FB) 130.132, Data Read buses (CB,DB) 134,136 and a coefficient program bus (BB) 138. Additionally, the P Unit 108 is coupled to sub-units within the A Unit 110 and D Unit 112 via various buses labeled CSR, ACB and RGD.

As illustrated in Figure 3, in the present embodiment the A Unit 110 includes a register file 30, a data address generation sub-unit (DAGEN) 32 and an Arithmetic and Logic Unit (ALU) 34. The A Unit register file 30 includes various registers, among which are 16 bit pointer registers (AR0, ..., AR7) and data registers (DR0, ..., DR3) which may also be used for data flow as well as address generation. Additionally, the register file includes 16 bit circular buffer registers and 7 bit data page registers. The general purpose buses (EB,FB,CB,DB) 130,132,134,136, as well as a coefficient data bus 140 and a coefficient address bus 142 are coupled to the A Unit register file 30. The A Unit register file 30 is coupled to the A Unit DAGEN unit 32 by unidirectional buses 144 and 146 respectively operating in opposite directions. The DAGEN unit 32 includes 16 bit X/Y registers and coefficient and stack pointer registers, for example for controlling and monitoring address generation within the processor 100.

The A Unit 110 also comprises the ALU 34 which includes a shifter function as well as the functions typically associated with an ALU such as addition, subtraction, and AND, OR and NOR logical operators. The ALU 34 is also coupled to the general-purpose buses (EB,DB) 130,136 and an instruction constant data bus (KDB) 140. The A Unit ALU is coupled to the P Unit 108 by a PDA bus for receiving register content from the P Unit 108 register file. The ALU 34 is also coupled to the A Unit register file 30 by buses RGA and RGB for receiving address and data register contents and by a bus RGD for forwarding address and data registers in the register file 30.

In accordance with the illustrated embodiment of the invention, D Unit 112 includes a D Unit register file 36, a D Unit ALU 38, a D Unit shifter 40 and two multiply and accumulate units (MAC1, MAC2) 42 and 44. The D Unit register file 36, D Unit ALU 38 and D Unit shifter 40 are coupled to buses (EB, FB, CB, DB and KDB) 130, 132, 134, 136 and 140, and the MAC units 42 and 44 are coupled to the buses (CB, DB, KDB) 134, 136, 140 and Data Read bus (BB) 144. The D Unit register file 36 includes 40-bit accumulators (AC0, ..., AC3) and a 16-bit transition register. The D Unit 112 can also utilize the 16 bit pointer and data registers in the A Unit 110 as source or destination registers in addition to the 40-bit accumulators. The D Unit register file 36 receives data from the D Unit ALU 38 and MACs 1&2 42, 44 over accumulator write buses (ACW0, ACW1) 146, 148, and from the D Unit shifter 40 over accumulator write bus (ACW1) 148. Data is read from the D Unit register file accumulators to the D Unit ALU 38, D Unit shifter 40 and MACs 1&2 42, 44 over accumulator read buses (ACR0, ACR1) 150, 152. The D Unit ALU 38 and D Unit shifter 40 are also coupled to sub-units of the A Unit 108 via various buses labeled EFC, DRB, DR2 and ACB.

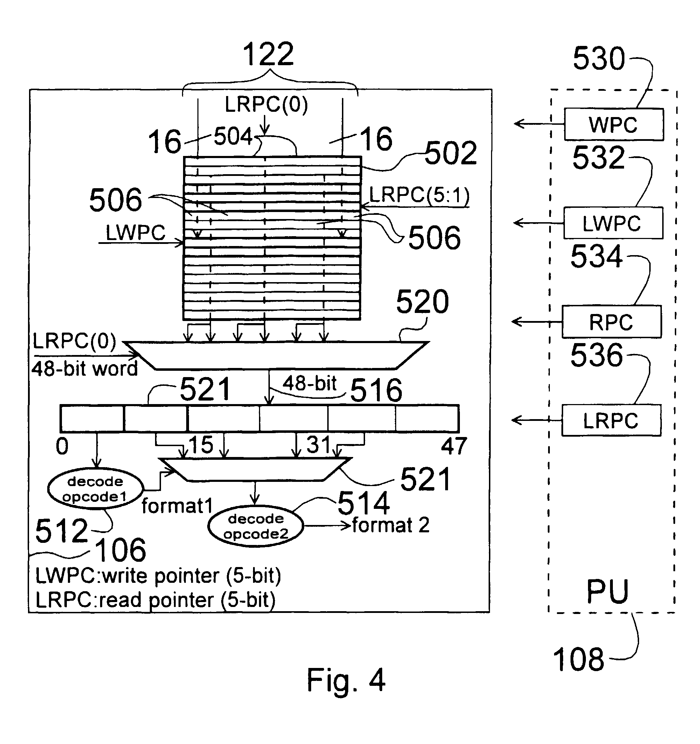

Referring now to Figure 4, there is illustrated an instruction buffer unit 106 in accordance with the present embodiment, comprising a 32 word instruction buffer queue (IBQ) 502. The IBQ 502 comprises 32x16 bit registers 504, logically divided into 8 bit bytes 506. Instructions arrive at the IBQ 502 via the 32-bit program bus (PB) 122. The instructions are fetched in a 32-bit cycle into the location pointed to by the Local Write Program Counter (LWPC) 532. The LWPC 532 is contained in a register located in the P Unit 108. The P Unit 108 also includes the Local Read Program Counter (LRPC) 536 register, and the Write Program Counter (WPC) 530 and Read Program Counter (RPC) 534 registers. LRPC 536 points to the location in the IBQ 502 of the next instruction or instructions to be loaded into the instruction decoder/s 512 and 514. That is to say, the LRPC 534 points to the location in the IBQ 502 of the instruction currently being dispatched to the decoders 512, 514. The WPC points to the address in program memory of the start of the next 4 bytes of instruction code for the pipeline. For each fetch into the IBQ, the next 4 bytes from the program memory are fetched regardless of instruction boundaries. The RPC 534 points to the address in program memory of the instruction currently being dispatched to the decoder/s 512/514.

In this embodiment, the instructions are formed into a 48 bit word and are loaded into the instruction decoders 512, 514 over a 48 bit bus 516 via multiplexers 520 and 521. It will be apparent to a person of ordinary skill in the art that the instructions may be formed into words comprising other than 48-bits, and that the present invention is not to be limited to the specific embodiment described above.

For presently preferred 48-bit word size, bus 516 can load a maximum of 2 instructions, one per decoder, during any one instruction cycle for parallel execution. The combination of instructions may be in any combination of formats, 8, 16, 24, 32, 40 and 48 bits, which will fit across the 48-bit bus. Decoder 1, 512, is loaded in preference to decoder 2, 514, if only one instruction can be loaded during a cycle. The respective instructions are then forwarded on to the respective function units in order to execute them and to access the data for which the instruction or operation is to be performed. Prior to being passed to the instruction decoders, the instructions are aligned on byte boundaries. The alignment is done based on the format derived for the previous instruction during decode thereof. The multiplexing associated with the alignment of instructions with byte boundaries is performed in multiplexors 520 and 521.

Two instructions can be put in parallel if one of the two instructions is provided with a parallel enable bit. The hardware support for such type of parallelism is called the parallel enable mechanism. Likewise, two instructions can be put in parallel if both of the instructions make single data memory accesses (Smem, or dbl(lmem)) in indirect mode. The hardware support for such type of parallelism is called the soft dual mechanism.

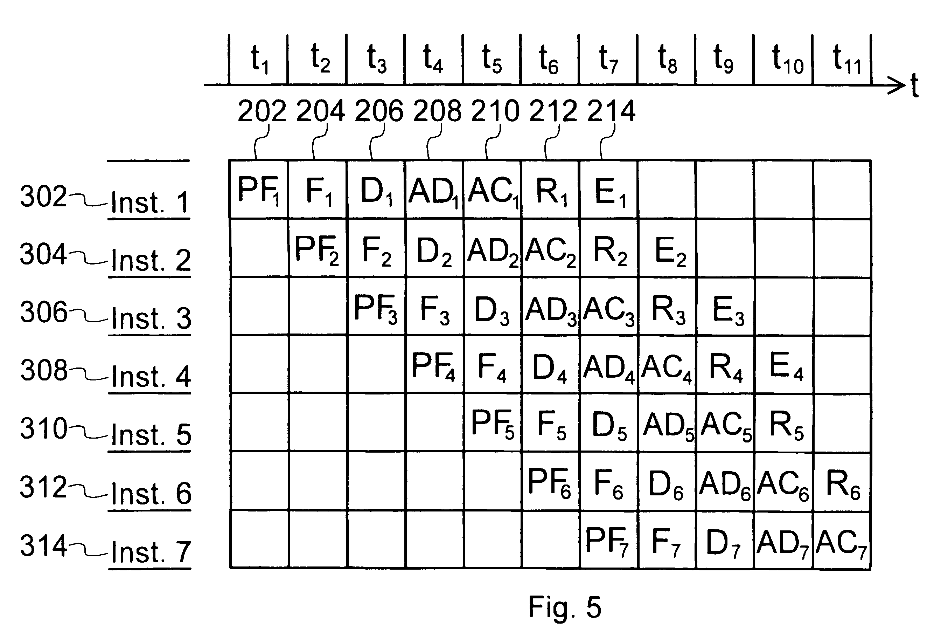

Processor core 102 executes instructions through a 7 stage pipeline, the respective stages of which will now be described with reference to Table 1 and to Figure 5. The processor instructions are executed through a seven stage pipeline regardless of where the execution takes place (A unit or D unit). In order to reduce program code size, a C compiler, according to one aspect of the present invention, dispatches as many instructions as possible for execution in the A unit, so that the D unit can be switched off to conserve power. This requires the A unit to support basic operations performed on memory operands.

**Table 1:**

| Processor pipeline operation for a single cycle instruction with no memory wait states | | |
|---|---|---|
| Pipeline stage | | Description. |
| P0 | Pre-Fetch | Address program memory via the program address bus PAB. |
| P1 | Fetch | Read program memory through the program bus PB. Fill instruction buffer queue with the 4 bytes fetched in program memory. |
| P2 | Decode | Read instruction buffer queue (6 bytes) Decode instruction pair or single instruction. Dispatch instructions on Program Flow Unit (PU), Address Data Flow i Unit (AU), and Data Computation Unit (DU). |
| P3 | Address | Data address computation performed in the 3 address generators located I in AU: - Pre-computation of address to be generated in : - direct SP/DP relative addressing mode. - indirect addressing mode via pointer registers. - Post-computation on pointer registers in : - indirect addressing mode via pointer registers. Program address computation for PC relative branching instructions: goto, call, switch. |
| P4 | Access | Read memory operand address generation on BAB, CAB, DAB buses. Read memory operand on CB bus (Ymem operand). |
| P5 | Read | Read memory operand on DB (Smem, Xmem operand), on CB and DB buses (Lmem operand), on BB (coeff operand) Write memory operand address generation on EAB and FAB buses. |
| P6 | Execute | Execute phase of data processing instructions executed in A unit and D unit. Write on FB bus (Ymem operand). Write Memory operand on EB (Smem, Xmem operand ), on EB and FB buses (Lmem operand). |

The first stage of the pipeline is a PRE-FETCH (P0) stage 202, during which stage a next program memory location is addressed by asserting an address on the address bus (PAB) 118 of a memory interface 104.

In the next stage, FETCH (P1) stage 204, the program memory is read and the I Unit 106 is filled via the PB bus 122 from the memory interface unit 104.

The PRE-FETCH and FETCH stages are separate from the rest of the pipeline stages in that the pipeline can be interrupted during the PRE-FETCH and FETCH stages to break the sequential program flow and point to other instructions in the program memory, for example for a Branch instruction.

The next instruction in the instruction buffer is then dispatched to the decoder/s 512/514 in the third stage, DECODE (P2) 206, where the instruction is decoded and dispatched to the execution unit for executing that instruction, for example to the P Unit 108, the A Unit 110 or the D Unit 112. The decode stage 206 includes decoding at least part of an instruction including a first part indicating the class of the instruction, a second part indicating the format of the instruction and a third part indicating an addressing mode for the instruction.

The next stage is an ADDRESS (P3) stage 208, in which the address of the data to be used in the instruction is computed, or a new program address is computed should the instruction require a program branch or jump. Respective computations take place in A Unit 110 or P Unit 108 respectively.

In an ACCESS (P4) stage 210, the address of a read operand is generated and the memory operand, the address of which has been generated in a DAGEN Y operator with a Ymem indirect addressing mode, is then READ from indirectly addressed Y memory (Ymem).

The next stage of the pipeline is the READ (P5) stage 212 in which a memory operand, the address of which has been generated in a DAGEN X operator with an Xmem indirect addressing mode or in a DAGEN C operator with coefficient address mode, is READ. The address of the memory location to which the result of the instruction is to be written is generated.

Finally, there is an execution EXEC (P6) stage 214 in which the instruction is executed in either the A Unit 110 or the D Unit 112. The result is then stored in a data register or accumulator, or written to memory for Read/Modify/Write instructions. Additionally, shift operations are performed on data in accumulators during the EXEC stage.

Processor 100's pipeline is protected. This significantly improves the C compiler performance since no NOP's instructions have to be inserted to meet latency requirements. It also makes the code translation from a prior generation processor to a latter generation processor much easier.

A pipeline protection basic rule used in processor 100 is as follows: if a write access has been initiated before the on going read access but not yet completed and if both accesses share the same resource then extra cycles are inserted to allow the write completion and execute next instruction with the updated operands; but for emulation, a single step code execution must behave exactly as free running code execution.

The basic principle of operation for a pipeline processor will now be described with reference to Figure 5. As can be seen from Figure 5, for a first instruction 302. the successive pipeline stages take place over time periods T₁-T₇. Each time period is a clock cycle for the processor machine clock. A second instruction 304, can enter the pipeline in period T₂, since the previous instruction has now moved on to the next pipeline stage. For instruction 3, 306, the PRE-FETCH stage 202 occurs in time period T₃. As can be seen from Figure 5 for a seven stage pipeline a total of 7 instructions may be processed simultaneously. For all 7 instructions 302-314, Figure 5 shows them all under process in time period T₇. Such a structure adds a form of parallelism to the processing of instructions.

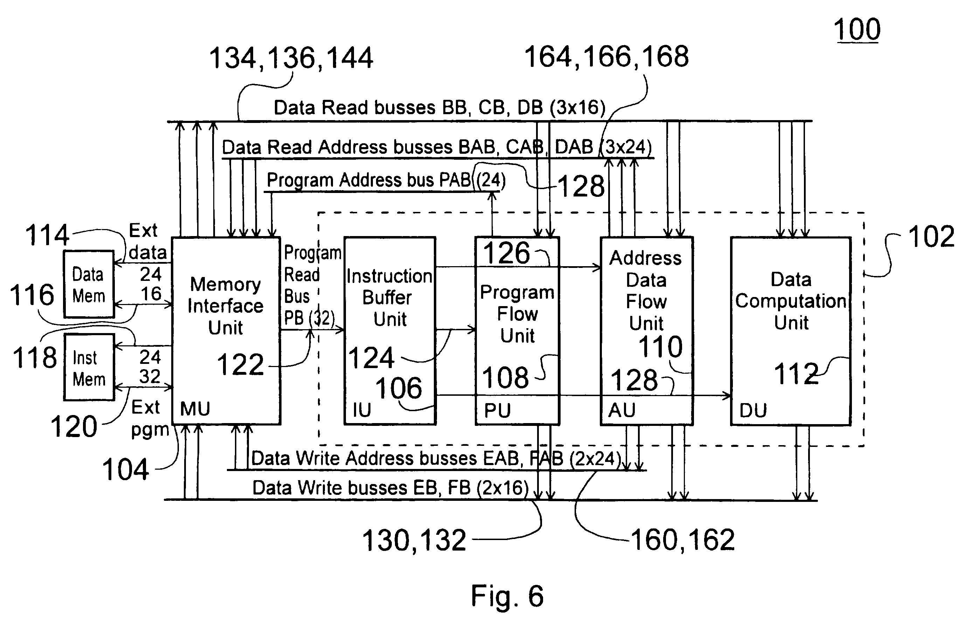

As shown in Figure 6, the present embodiment of the invention includes a memory interface unit 104 which is coupled to external program storage memory 150 via a 24 bit address bus 118 and a 32 bit bi-directional data bus 120. Additionally, the memory interface unit 104 is coupled to data memory units 151 via a 24 bit address bus 114 and a bi-directional 16 bit data bus 116. The memory interface unit 104 is also coupled to the I Unit 106 of the machine processor core 102 via a 32 bit program read bus (PB) 122. The P Unit 108, A Unit 110 and D Unit 112 are coupled to the memory interface unit 104 via data read and data write buses and corresponding address buses. The P Unit 108 is further coupled to a program address bus 128.

More particularly, the P Unit 108 is coupled to the memory interface unit 104 by a 24 bit program address bus 128, the two 16 bit data write buses (EB, FB) 130, 132, and the two 16 bit data read buses (CB, DB) 134, 136. The A Unit 110 is coupled to the memory interface unit 104 via two 24 bit data write address buses (EAB, FAB) 160, 162, the two 16 bit data write buses (EB, FB) 130, 132, the three data read address buses (BAB, CAB, DAB) 164, 166, 168 and the two 16 bit data read buses (CB, DB) 134, 136. The D Unit 112 is coupled to the memory interface unit 104 via the two data write buses (EB, FB) 130, 132 and three data read buses (BB, CB, DB) 144, 134, 136.

Figure 6 represents the passing of instructions from the I Unit 106 to the P Unit 108 at 124, for forwarding branch instructions for example. Additionally, Figure 6 represents the passing of data from the I Unit 106 to the A Unit 110 and the D Unit 112 at 126 and 128 respectively.

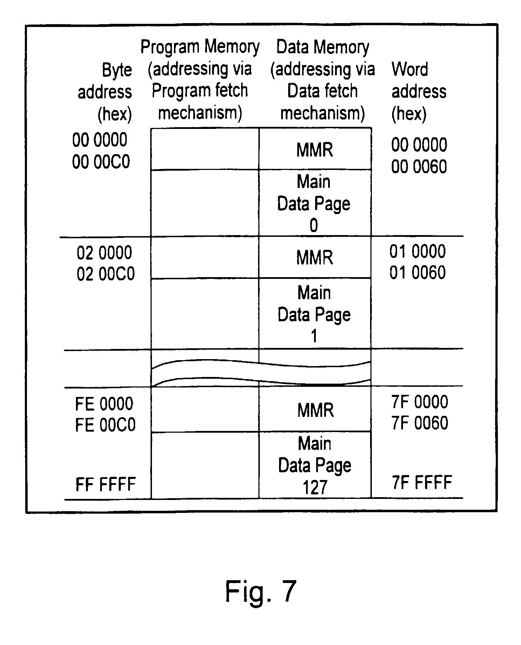

Processor 100 is organized around a unified program/data space, as illustrated in Figure 7. A program pointer is internally 24 bits and has byte addressing capability, but only a 22 bit address is exported to memory since program fetch is always performed on a 32 bit boundary. However, during emulation for software development, for example, the full 24 bit address is provided for hardware breakpoint implementation. Data pointers are 16 bit extended by a 7 bit main data page and have word addressing capability. Software can define up to 3 main data pages, as follows:

| | | | |
|---|---|---|---|
| MDP | Direct access | Indirect access | CDP |
| MDP05 | - | Indirect access | AR[0-5] |
| MDP67 | - | Indirect access | AR[6-71 |

A stack is maintained and always resides on main data page 0. CPU memory mapped registers are visible from all the pages.

Various aspects of processor 100 are summarized in Table 2.

**Table 2-**

| Summary of Improved Processor 100 | |
|---|---|
| Very Low Power programmable processor | |
| Parallel execution of instructions, 8-bit to 48-bit instruction format | |
| Seven stage pipeline (including pre-fetch) | |
| - Instruction buffer unit highlight | 32x16 buffer size Parallel Instruction dispatching Local Loop |
| Data computation unit highlight | Four 40 bit generic (accumulator) registers Single cycle 17x17 Multiplication-Accumulation (MAC) 40 bit ALU, "32 + 8" or "(2 x 16) + 8 " Special processing hardware for Viterbi functions Barrel shifter |
| Program flow unit highlight | 32 bits/cycle program fetch bandwidth 24 bit program address Hardware loop controllers (zero overhead loops) Interruptible repeat loop function Bit field test for conditional jump Reduced overhead for program flow control |
| Data flow unit highlight | Three address generators, with new addressing modes Three 7 bit main data page registers Two Index registers Eight 16 bit pointers Dedicated 16 bit coefficients pointer Four 16 bit generic registers Three independent circular buffers Pointers & registers swap 16 bits ALU with shift |
| Memory Interface highlight | Three 16 bit operands per cycle 32 bit program fetch per cycle Easy interface with cache memories |
| C compiler | |
| Algebraic assembler | |

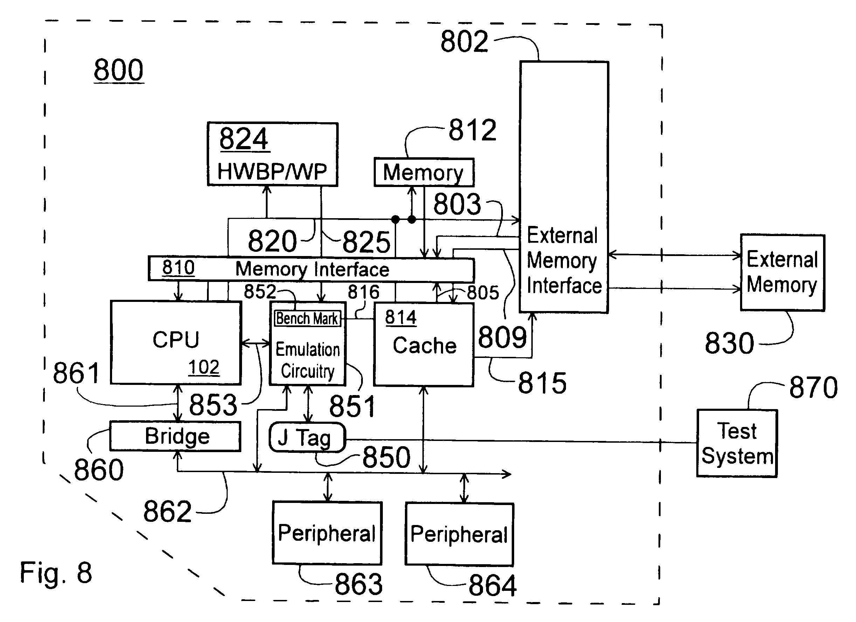

Figure 8 is a block diagram illustrating a digital system with the processor 100 and associated with benchmarking circuitry 852, according to aspects of the present invention. In this embodiment, several individual ASIC component cells are combined to form megacell 800 on a single integrated circuit. Processor 100 is connected to memory interface 810. Instructions and data can be obtained from cache 814, internal memory 812, or external memory 830 via the external memory interface 802. Program fetch address bus 820 provides program counter addresses to cache 814 or memories 812, 830 in response to RPC 534 (see Figure 5). The cache requests a program fetch from external memory 830 via bus 815 when a cache miss occurs. In this case, instruction data is provided to processor core 102 via bus 808 while the cache is updated via bus 809. According to an aspect of the present invention, cache miss signal 816 is provided to benchmark circuitry 852 so that each cache miss within a selected time period can be counted as a benchmark event. Hardware breakpoint/window point circuitry 824 monitors address buses 820 and 822 and sends a window signal 825 to benchmark circuitry 852 when a pre-selected address or address range is detected. Emulation circuitry 851 provides access to the various components within megacell 800 via JTAG test port 850. Memory read and write requests can be conducted by the emulation circuitry across emulation bus 853 by sending a request to processor core 102.

Emulation circuitry 851 provides common debug accesses (read and writing of memory and registers) without direct CPU intervention through a Debug and Test Direct Memory Access (DT-DMA) mechanism. Since these access intrude on CPU time, they can be optionally blocked by disabling the debug mode (DBGM) by setting a bit in status / control register 1 (ST1). This can be overridden using the debugger software, as discussed below. Under normal debugger operation, the DT-DMA accesses use very minimal CPU time. For example, consider that a debugger screen contains 1,000 memory words to access and the screen is updated 10 times per second. The debugger will perform 10,000 DT-DMA accesses per second. Assume that each DT-DMA access takes one cycle of CPU time (this is a very simplistic estimate), and the CPU is running at a 100 MIP (10 ns per cycle). The debug overhead will be 0.01% (if a DT-DMA access takes multiple cycles, then multiply that number by 0.01% to get the overhead rate). Note that the information shown on the debugger screen is gathered at different times from the target, so it does not represent a snapshot of the target state, but rather a composite. It also takes the host time to process and display the data, so the display does not correspond to the current target state, but rather to the target state as of a few milliseconds ago.

Access to memory-mapped peripheral registers by a test host is also done through the DT-DMA mechanism. Because the DT-DMA mechanism uses the same memory access mechanism as the CPU, any read or write access that the CPU can perform in a single operation can be done via a DT-DMA memory access. The DT-DMA mechanism will present an address (and data, in the case of a write) to the CPU via bus 853, which will perform the operation during an open bus cycle slot. Once the CPU has obtained the desired data, it is presented back to the DT-DMA mechanism.

The DT-DMA mechanism can operate in either a preemptive or non-preemptive mode. In non preemptive mode, the DT-DMA mechanism waits for the desired memory bus(ses) to be unused for a cycle (referred to as a hole), at which point the DT-DMA mechanism uses it to perform the read or write operation. These memory holes will occur naturally while the CPU is running (e.g while waiting on newly fetched data or during a pipeline protection cycle). A program memory hole will occur when the fetch queue is full, typically due to several consecutive instructions with no branches. In preemptive mode, a NULL is jammed into the decade stage of the pipeline, essentially creating a hole. Non-preemptive accesses to zero-wait state memory take no cycles away from the CPU. If wait-stated memory is accessed, then the pipeline will stall during each wait-state, just as a normal memory access would cause a stall CPU registers must always be accessed preemptively. Also, it is possible for the debug software to jam certain instructions into the pipeline using the DT-DMA mechanism. This must be done preemptively.

JTAG interface 850 is an improvement on the structure of the IEEE 1149.1 - 1990 "Standard Test Access Port and Boundary Scan Architecture. Terms and concepts relating to IEEE 1149.1 which are used herein are explained fully in this IEEE standard.

The IEEE 1149.1 standard provides a communication protocol that allows the selection of one or more devices imbedded within a system. This protocol implements the primitives necessary to control on-chip debug and test facilities. JTAG Debug interface 850 of the present invention adds two additional terminals (nET1 and nET0) to the five terminal version of the standard IEEE interface (nTRST, TCK, TMS, TDI, and TDO). Including nTRST in the debug interface definition simplifies system design as this terminal, when held LOW, generates an asynchronous reset to the test and debug logic of each device within the system. This guarantees normal system operation. This also eliminates the need for the system to provide a continuously running TCK.

Emulation circuitry 851 contains hardware extensions to the standard IEEE interface, providing more advanced debugging and production test features. Although the IEEE standard targets testing board or system level interconnect, extensions to its functionality can do much more. Four significant extensions add to the baseline IEEE function, as follows: debug facilities, multiple scan technologies, trigger channels through two additional terminals, and extended operating modes (EOMs). The following paragraphs briefly describe each of these four extensions.

Debug Facilities: Development tools use the debug interface to control the execution flow of an application program and to view or modify CPU registers, peripheral registers, and system memory. Built in debug facilities provide both stop mode and real-time debug environments. Specialized hardware, managed with IEEE interface primitives, provides the execution control for both of these debug modes. Stop-mode debug facilities can halt program execution after any instruction at any point in the program. This provides precise control of all program execution and minimizes the development tool's use of system resources. Real-time debug facilities insulate time critical (interrupt driven) portions from debug activity. These portions of the application continually execute while the remaining portion (less time critical) of the application are debugged in a conventional fashion. Both real-time and stop-mode debug allow program execution to be halted for the following reasons: after single instruction is executed; prior to the execution of instructions identified as breakpoints; after a specific data access (read or write), or; by an asynchronous external request.

Access to Alternate Scan Technologies: Various system designs may contain multiple scan technologies, such as IEEE and proprietary scan architectures, as they offer different technical advantages. Standard IEEE instruction scan, data scan and run test more than one technology. Hardware is added to the device to provide a bridge between IEEE and other scan technologies.

Visibility and Triggering: The IEEE standard does not support the parallel observation of internal chip activity or parallel stimulation of chip activity required for some test and emulation functionality. The addition of two additional terminals (nET1 and nET0) to the debug interface address this deficiency. These terminals provide a way to export internal device events and import external debug or test events.

Extended Operating Modes: Production test, yield analysis, characterization of device components and target system hardware and software debug require the implementation of various device operating modes. Test mode selection involves one of two methods, indirect (scan sequences) and direct (parallel device terminal transitions). Memory test modes generally use direct selection methods. These tests provide direct access to a memory array or memory and may use memory testers that do not support scan. CPU core tests use indirect methods. Testers use scan to load CPU core tests and specify test modes needed to run them. Testing multiple scannable Mega-modules on a device, i.e., two processors, requires the selection and test of one Mega-module at a time. This requirement arises from the need to use an unmodified set of module test patterns in all module test environments.

An external test host system 870, such as an XDS-524 emulation system (available from Texas Instruments, Inc) can be connected to 7 pin JTAG interface 850 for controlling emulation control 851.

Still referring to Figure 8, bridge 860 connects to data bus 861 and provides a buffered data bus, RBus 862. Peripherals 863 and 844 are representative of a variety of peripheral devices that may be connected to Rbus 862. Rbus 862 also connects to emulation circuitry 851 and to cache circuitry 814 in order to provide memory mapped access to registers therein.

Table 3 lists memory mapped registers within processor core 102 that is relevant to an understanding of this embodiment of the present invention. These registers will be described in more detail in the following paragraphs. Processor core 102 also has a number of other memory mapped registers that are used for various control, status, and operational tasks.

**Table 3:**

| Memory Mapped CPU Register | | | |
|---|---|---|---|
| MMR Register | Word Address (Hex) | Register Description | Bit Field |
| ST1 | 07 | System control register | [15-00] |
| ST3 | 37 | System control register | [15-00] |

Table 4 summarizes the bit assignments of status/control register ST3.

**Table 4 -**

| Status/Control Register ST3 | |
|---|---|
| HOMP | Bit 0: Host only access mode to Peripherals |
| HOMR | Bit 1: Shared access mode to HPI RAM 802 |
| HOMX | Bit 2: Host only access mode: |
| HOMY | Bit 3: Host only access mode: This bit operates the same as HOMX. |
| HINT | Bit 4: Host interrupt |
| XF | Bit 5: External Flag: |
| CBERR | Bit 6: CPU bus error: |
| MP/NMC | Bit 11: Microprocessor / microcomputer mode: |
| AVIS | Bit 12: Address visibility mode |
| CACLR | Bit 13: Cache clear |
| CAEN | Bit 14: Cache enable |
| CAEN = 1 | Program fetches will either occur from the Cache, from the internal memory or from the direct path to external memory, via the MMI depending on the program address decode. |
| CAEN = 0 | The Cache controller will never receive a program request, hence all program requests will be handled either by the internal memory or the external memory via the MMI depending on address decode. |
| CAFRZ | Bit 15: Cache freeze |
| ST3[10:7] | Unused status register bits |

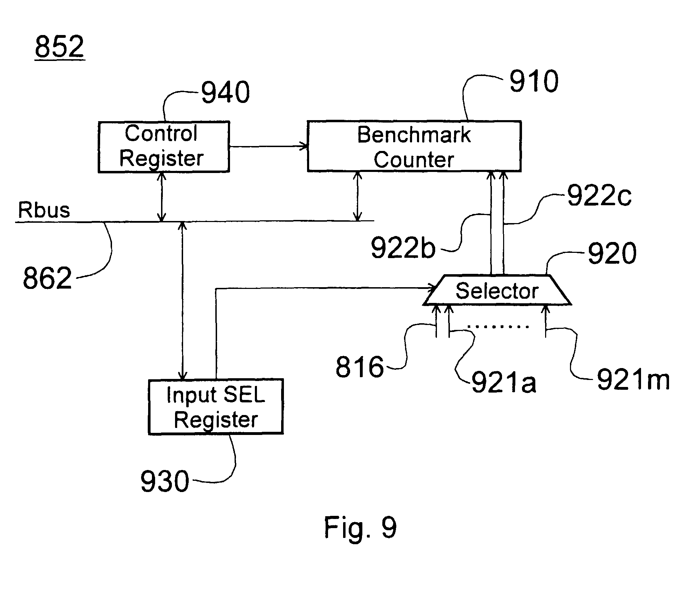

Figure 9 is a block diagram illustrating benchmark circuitry 852 of Figure 8. Benchmark counter 910 provides the ability to count a number of emulation events, also referred to as benchmark events. Selector 920 selects a particular type of event to be counted from among several event signals 921a-921n, including cache miss signal 816. Input select register 930 controls which event signal is selected. Benchmark counter inputs are synchronized to the CPU clock and are active for one cycle per occurrence. The benchmark counter is configurable to count CPU clock cycles (or other inputs) including or excluding emulation cycles. The benchmark counter is configurable to count emulation events (e.g. hardware breakpoints - HWBPs, hardware watch points - HWWPs). Table 5 lists various benchmark events that can be counted by benchmark counter 910. This list is not exhaustive, and other embodiments may have other benchmark events within the aspects of the present invention.

**Table 5 -**

| Benchmark Counter External Inputs | |
|---|---|
| Cache Miss | External WP2 matches |
| Instructions | External WP3 matches |
| Parallel Instructions Clock Cycles | |
| Interrupts | Reserved |
| Pipe Protection NULL cycles | Reserved |
| Instruction Fetch NULL cycles | Reserved for ASIC |
| Data Fetch NULL cycles | Reserved for ASIC |
| Idle Clock Cycles | Reserved for ASIC |

The benchmark counter is configurable and it's operation is controlled by control register 940. Each register is accessible via Rbus 862 as a memory mapped register. Monitoring software executing on processor core 102 can thereby configure the benchmark circuitry and monitor the results directly. Alternatively, an external test system can send DT-DMA read and write requests via JTAG interface 850 to processor core 102 and thereby configure the benchmark circuitry and monitor the results remotely.

Benchmark counter 910 can be configured as a 40 bit benchmark counter, a 32 bit benchmark counter, or two 16 bit benchmark counters. Each counter configuration is mutually exclusive; a 32 bit and 16 bit counter can not be configured simultaneously. For example, to perform a 40 bit cycle count and a 16 bit cache miss count requires configuring the counters and executing the code under evaluation twice.

Cache miss signal 816 is asserted by cache 814 once for each cache miss event. The benchmark counter is configurable to count cache miss occurrences. This is not the duration, in cycles, of cache misses, but the number of cache miss events.

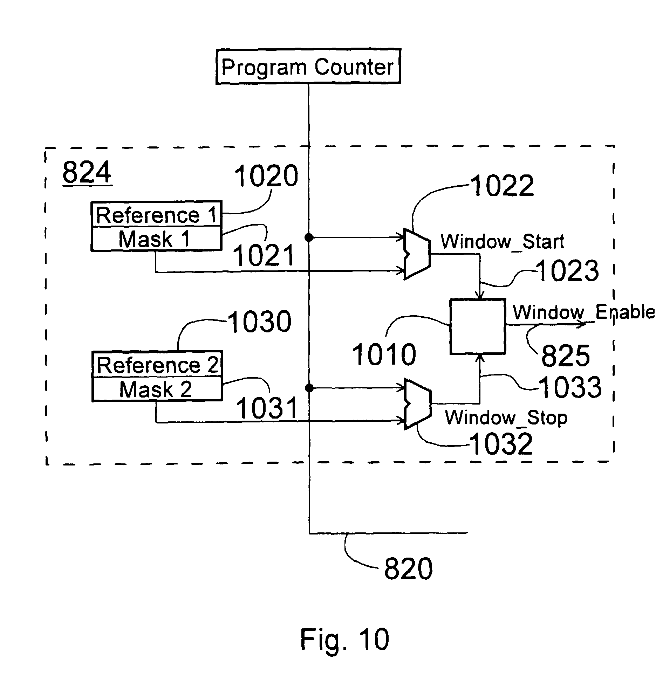

Figure 10 is a block diagram illustrating breakpoint/windowing circuitry 824. This block contains enough logic to support two simultaneous breakpoints, two simultaneous watchpoints, or one breakpoint and one watchpoint. Reference register 1020 is loaded with a first data value corresponding to a first instruction address. Mask register 1021 is loaded with a mask value to optionally ignore portions of register 1021. The resultant value is compared against program address bus 820 by comparator 1022 to form match signal 1023. Likewise, reference register 1030 is loaded with a second data value corresponding to a second instruction address. Mask register 1031 is loaded with a mask value to optionally ignore portions of register 1031. The resultant value is compared against program address bus 820 by comparator 1032 to form match signal 1033.

When configured as two watchpoints, control circuitry 1010 can be configured to provide match output signal 825 to match only if the two transactions match simultaneously, match in sequence (first one followed by the other), or may operate independently (each providing it's own match indication).

Referring again to Figure 8, cache 814 will now be described in more detail. For the purpose of this specification, the following definitions will be used:
- Cache word - the processor defines a word as a 16 bit entity.
- Cache Line - The Cache memory is organised as 32 bits wide. Hence one of these 32 bit entities contains two words, and is referred to as a Cache line.
- Cache Block - A Cache block is the 4 * 32 bit area of memory (i.e. 4 lines) that has one tag and 4 validity bits (one validity bit per Cache line) associated with it.

The high performance required by a DSP processor requires a highly optimised data and program flow for high data and instruction throughput. The foundation of this is the memory hierarchy. To reap the full potential of the DSP's processing units, the memory hierarchy must read and write data, and read instructions fast enough to keep the relevant CPU units busy.

To satisfy the application requirements, the DSP processor memory hierarchy must satisfy the conflicting goals of low cost, adaptability and high performance. One of the key features of the processor is that it can be interfaced with slow program memory, such as external memory 830, which can be Flash memory, for example. However, DSP execution requires a high bandwidth for instruction fetching. It is possible to execute DSP code from internal memory 812, but this requires the downloading of the full software prior to it's execution. Thus, a Cache memory, which is an auxiliary fast memory between the processor and it's main memory, where a copy of the most recently used instructions (and/or data) are written to be (re)accessed faster, sitting on the DSP program bus is the best trade-off for speed of program access and re-fill management.

A Cache will improve the overall performance of a system because of the program locality or locality of reference principle. No Cache will work if the program accesses memory in a completely random fashion. To evaluate the architecture of a Cache, it is necessary to do statistical optimisations. A Cache architecture may be very good for a given program, but very bad for a different program. Hence it is very important to perform simulations and measure the performance on the actual prototypes.

Caches generally give very efficient typical memory accesses times, but they do increase the maximum memory access time. This may be a problem in real-time operations. Therefore it may be important to optimise the number of lost clock periods on miss memory accesses. The performance of a general Cache architecture is determined by the following:
- Cache Memory Speed
- Main Memory Speed
- Cache Size
- Cache Block Size
- Cache Organisation
- Cache Replacement Algorithm
- Cache Fetch Policy
- Cache Read Policy
- Cache Write Policy
- Cache Coherence Policy

Cache 814 of the present embodiment is a "read only" instruction Cache; therefore, the latter two points can be ignored. However, other embodiments may have other types of caches.

Several analyses performed on pieces of DSP software for wireless telephone applications showed that a relatively small Cache size combined with a simple architecture is efficient. Thus, the following features have been defined for the present embodiment:
Cache size : 2K words of 16 bits.
8 words per block (8 x 16 bits).
4 validity bits per block (one per Cache line).
Cache type : Direct-mapped.
Look-through read policy.

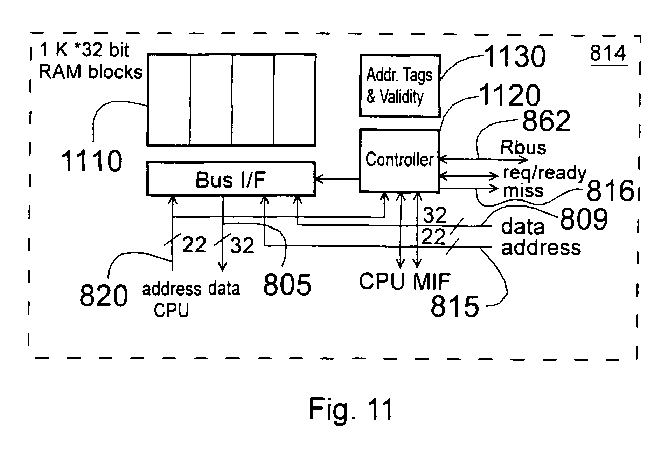

Figure 11 is a block diagram of the Cache. Cache 814 consist of Memory Core 1110 and Controller 1120. As the program space is addressable as 4 bytes (2 words) aligned to the 4 byte boundary in the processor, and as 4 bytes (2 words) are fetched per cycle, the program memory core can be organised in banks of 32-bit words for all read and write accesses.

The Cache detects if any requests for an instruction from the CPU can be served by the Cache or if a new block of instructions needs to be filled from external memory. In order to do this, the Cache Controller manages buffer memory 1130 of address tags associated with flags to indicate that the Cache content is valid or not.

As described earlier, the processor has a six stage pipeline with the first four stages, pre-fetch, fetch, decode and address stages, relevant to the Cache design. For a Pre-fetch cycle the IBU generates an address and a Request signal. The address is decoded in the MIF block and the relevant module requests are derived and sent to their respective modules. When the Cache receives a request from the MIF block it latches the address (value of the Program Counter) generated by the CPU. It then uses the lsbs of the address as an address to its Data RAM and its Address RAM (containing the Tag value and the Validity bits) in parallel. If the msbs of the address received from the CPU matches those read from the relevant location in the Address RAM and the validity bit is set, then a hit is signified to the Processor by the return of an ready signal in the fetch cycle along with the appropriate data read from the Data RAM.

If the msbs of the address received from the IBU do not match those read from the relevant location in the Address RAM or the validity bit is not set, then a miss is signified to the Processor by keeping the ready inactive in the fetch-cycle and an external request and the requested address are sent to the MMI interface for reading external program memory. According to an aspect of the present invention, miss signal 816 is also asserted and sent to benchmark circuitry 851 so that a miss event can be counted as a benchmark event.

When the MMI returns and ready along with the data requested, the data can be latched into the Cache Data memory and the msbs of the requested address latched into the Address memory along with setting of the relevant validity bit in the same memory area. In the same cycle the data can also be sent back to the CPU along with an ready.

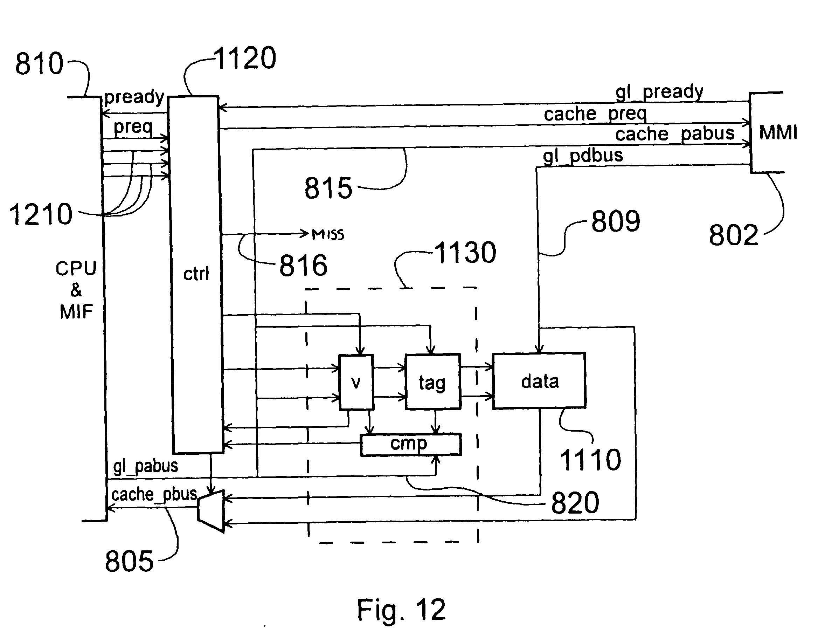

Figure 12 shows a more detailed block diagram for a direct-mapped Cache using a word by word fetch policy to highlight the instruction flow through the Cache, but not showing the test and control interface port.

As stated at the start of the previous section, there are several factors in the Cache architecture that determine the performance of the Cache. They will be examined in more depth in this section. The main problem to be addressed is system performance, the instruction flow to the processor must be maintained at a high level, whenever possible, allowing it to run freely as often as possible (i.e. with a minimum of stalls). This means the fetching of redundant data into the Cache should be minimised and the penalty for external fetches should also kept to a minimum.

The cost of FLASH memory is sufficiently high at present to justify that code size is one of the most important criteria when choosing a DSP processor for uses such as cellular telephones. Hence the processor is optimised for code size and many architectural decisions have been made so that the code size for a typical application was smaller than an industry standard processor. To this end variable length instructions are used and the code is compacted, so that there is no alignment of instructions. This non-alignment also applies to calls and branches, where the code is not aligned to any boundary, whereas a x86 processor aligns calls/branch code to Cache block boundaries. This means that whenever a call / branch occurs the processor may access code from the middle of a Cache block. These conditions mainly affect the fetch policy of the Cache.

The 2K word size of the Cache was set because analysis of DSP code from typical cellular phone applications indicated that most code routines would fit within 1k words of program memory.

For control code we can expect a branch every 4 instructions (a typical industry figure) and for DSP algorithm code we can expect a call or branch every 8 cycles (Note: this is for code generated by a 'C' compiler - for hand assembled code, branches / calls will appear less often). Hence from this and from some initial analysis, the size of a block in the Cache was set to 8 Cache words (16 bytes). This is a compromise figure between access to external memory such as FLASH. arbitration for access to such devices at the external interface and the desire to reduce the number of redundant fetches of instructions that will not be used, due to calls and branches within the code.

The Cache is designed to be transparent to the user. Therefore to locate an item in the Cache, it is necessary to have some function which maps the main memory address into a Cache location. For uniformity of reference, both Cache and main memory are divided into equal-sized units, called blocks. The placement policy determines the mapping function from the main memory address to the Cache location.

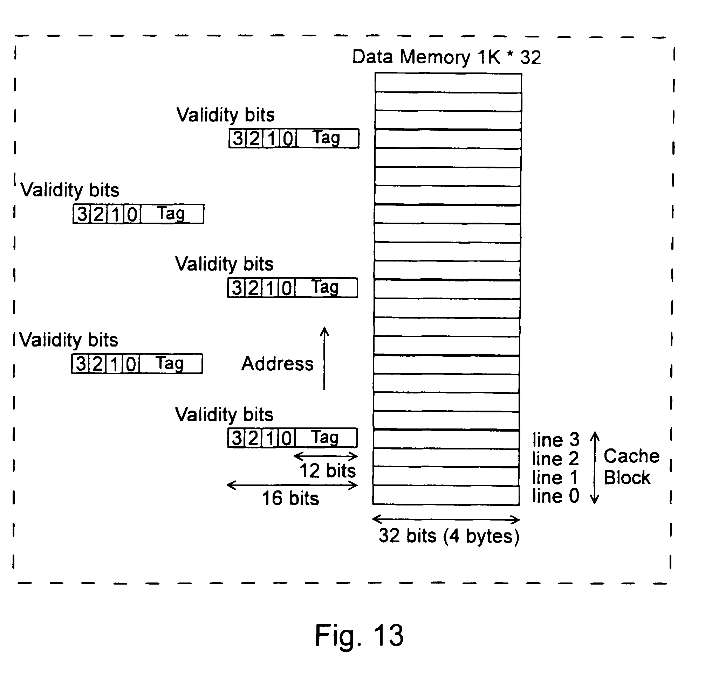

Figure 13 is a diagram illustrating Cache Memory Structure shows the memory structure for a direct mapped memory. Each Cache line consists of 4 bytes (32 bits). Each Cache block contains four lines (16 bytes, 8 words). Each line within a block has it's own validity bit, hence four validity bits per block, and each block has a tag (consisting of the msbs of the address field).

Cache 814 uses direct mapping, which is the simplest of all Cache organisations. In this scheme, block i (block-address) of the main memory maps into the block i modulo 256 (the number of blocks in the Cache) of the Cache. The memory address consists of four fields: the tag, block, word and byte field. Each block has a specific tag associated with it. When a block of memory exists in a Cache block, the tag associated with that block contains the high-order 12 bits of the main memory address of that block. When a physical memory address is generated for a memory reference the 8-bit block address field is used to address the corresponding Cache block. The 12-bit tag address filed is compared with the tag in the Cache block. If there is a match, the instruction in the Cache block is accessed by using the 2-bit word address field.

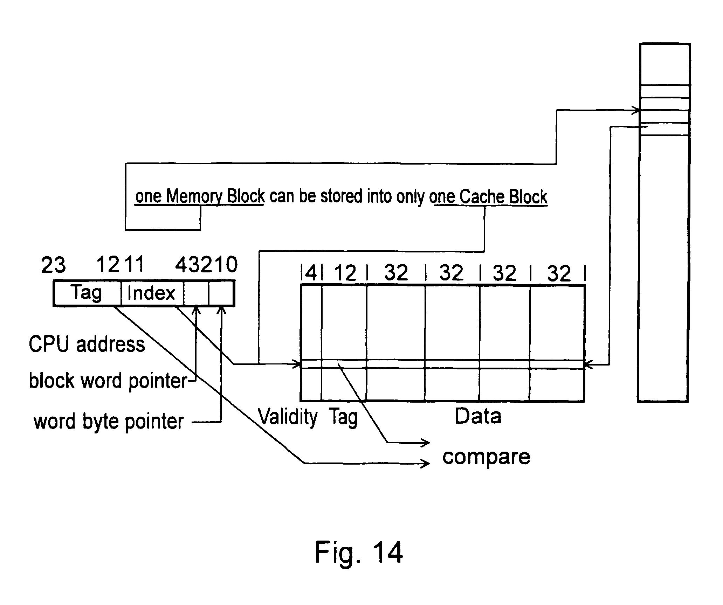

Figure 14 is a flow diagram illustrating how a block of main memory is mapped into cache memory in a direct mapped Cache organization. A disadvantage of the direct-mapped Cache when associated with a processor is that the Cache hit ratio drops sharply if two or more blocks, used alternatively, happen to map onto the same block in Cache. This causes a phenomenon known as "thrashing," where two (or more) blocks continuously replace each other within the Cache, with the subsequent loss in performance. The possibility of this is relatively low in a uni-processor system if such blocks are relatively far apart in the processor address space. The problem can usually be relatively easily overcome on the processor design when assembler coding is manually performed.

The architecture of the Cache Controller provides parallel access to improve the throughput. This means that the address tags and the data will be accessed at the same time and then enabled onto the bus only if the address tag matches that stored in memory and the validity bits are validated, rather than using the address tag as an enable to the data RAMs. Advantageously, benchmarking of cache miss events according to an embodiment of the present invention can be used to determine when thrashing is occurring so that a corresponding section of software code can be optimised for better performance.

The direct mapped Cache has the advantage of a trivial replacement algorithm by avoiding the overhead of record keeping associated with a replacement rule. Of all the blocks that can map into a Cache block only one can actually be in the Cache at a time. Hence if a block causes a miss, the controller simply determines the Cache block this block maps onto and replaces the block in that Cache block. This occurs even when the Cache is not full.

In this embodiment, External memory 830 is mapped onto the Cache memory. However, internal SARAM 812 is mapped above the External Memory and is not cacheable. Code, for example interrupt routines, can be DMAed from the External memory into the internal SARAM and the vector table rebuilt so that there is no problem of consistency.

Since the Cache of this embodiment is solely an instruction Cache, with no self modifying code there is not a problem with consistency of data within the Cache to that in the external memory.

In this embodiment, no data on the External Memory or the Internal Memory is cacheable, nor are there any self modifying instructions. Hence no write policy is needed as there is no need to write back to the Cache.

A CPU Status Register (ST3) contains three bits to control the Cache: gl_cacheenable (Cache enable), gl_cachefreeze (Cache freeze) and gl_cacheclr (Cache clear). They are described below.

Cache enable (gl_cacheenable) bit: The Cache enable signal 1210a is not sent to the Cache block, but it is only sent to the Internal Memory Interface (MIF) module, where it is used as a switch off mechanism for the Cache. When it is active, program fetches will either occur from the Cache, from the internal memory system, or from the direct path to external memory, via the MMI, depending on the program address decoding performed in the MIF block. When it is inactive, the Cache Controller will never receive a program request, hence all program requests will be handled either by the internal memory system or the external memories via the MMI depending on the address decoding.

The Cache flushing is controlled by the gl_cacheenable bit. It is set there as it's behaviour is required to be atomic with the main processor. This is because when the Cache is disabled / enabled, the contents of the pre-fetch queue in the CPU must be flushed, so that there is no fetch advance, i.e. no instructions in the pipeline after the instruction being decoded (the Cache enable instruction). Otherwise the correct behaviour of the processor cannot be guaranteed.

The Cache enable functionality is honoured by the emulation hardware. Hence when the Cache is disabled, if the external memory entry to be overwritten is present in the Cache, the relevant Cache line is not flushed.

Cache clear (gl_cacheclr) bit, signal 1210b: The Cache can be cleared (all blocks are invalid) with an external command.

Cache Freeze (gl_cachefreeze) bit, signal 1210c: The Cache Freeze signal provides a mechanism whereby the Cache can be locked, so that it's contents are not updated on a Cache miss, but it's contents are still available for Cache hits. This means that a block within a "frozen" Cache is never chosen as a victim of the replacement algorithm; its contents remain undisturbed until the gl_cachefreeze status is changed.

This means that any code loop that was outside of the Cache when it was "frozen" will remain outside the Cache, and hence there will be the cycle loss associated with a Cache miss, every time the code is called. Hence this feature should be used with caution, so as not to impact the performance of the processor. Advantageously, benchmarking of cache miss events according to embodiments of the present invention can be used to determine when cycle loss is occurring due to freezing so that a corresponding section of software code can be optimised for better performance.

The Cache freeze functionality is honoured by the emulation hardware. Hence when the Cache is frozen, if the external memory entry to be overwritten is present in the Cache, the relevant Cache line is not flushed.

Table 6 lists the cache register memory map. All of the configuration registers are 16 bit. These registers are accessed via Rbus 862. Since the Cache external bus registers are mapped on a word basis and are only accessible in word accesses from the external Bus, the following Cache Controller Memory Map tabulates the word offset from the Cache base address for each of the Cache registers.

**Table 6 -**

| Cache Register Memory Map | | | |
|---|---|---|---|
| Area | Word offset from Cache base (hex) | Access | Register |
| Global Control | 00 | None | Reserved |
| | 01 | 2 bit W/R | Burst Configuration |
| Test Registers | 08 | 16 bit W/R | Cache Test Control Register |
| | 09 | 16 bit W/R | Cache Test Data Register |
| | 0A | 12 bit W/R | Cache Test Tag Register |
| | 0B | 4 bit W/R | Cache Test Status Register |
| Emulation | 10 | 5 bit R | Cache Emulation Register |

The Cache Emulation Register allows the emulation hardware to interrogate the Cache hardware and understand the size and organisation of the Cache. This allows the emulation functions to be generic. The Cache Emulation Register is illustrated in Table 7.

**Table 7 -**

| Cache Emulation register (CAH_EMU) (Read) | | | |
|---|---|---|---|
| Bit | Name | Function | Value at Reset |
| 1:0 | ORG_CODE | Organisation Code bits | 00 |
| | | 00 - Direct-mapped | |
| | | 01 - 2-way set-associative | |
| | | 10 - 4-way set-associative | |
| | | 11 - 8-way set-associative | |
| 4:2 | SIZ_CODE | Size Code bits | 001 |
| | | 000 - 1k word | |
| | | 001 - 2k word | |
| | | 010 - 4k word | |
| | | 011 - 8k word | |
| | | 100 - 16k word | |
| | | 101 - 32k word | |
| | | 110 - 64k word | |
| | | 111 - 128k word | |
| 15:5 | | Unused | |

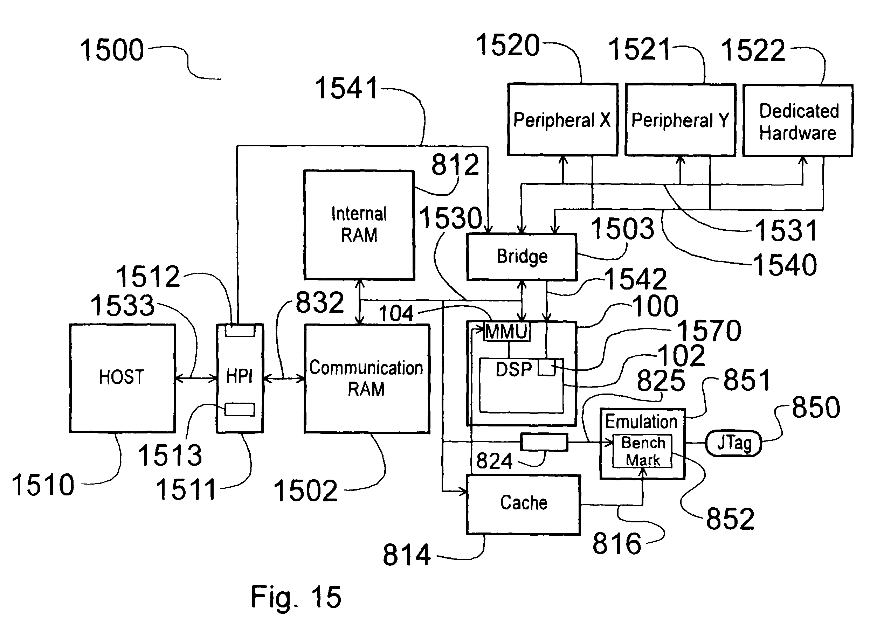

Figure 15 is a block diagram illustrating an alternative embodiment of a digital system with DSP 100, according to aspects of the present invention. Digital system 1500 includes processor 100, as described earlier, and a second processor referred to as host processor 1510.

DSP core 100 performs digital signal processing related tasks, while host processor 1510 performs other application tasks. DSP 100 is connected to an internal program memory circuit 812 and to a dual ported communication memory circuit 1502 via bus 1530. Bridge 1503 is also connected to bus 1530 and provides access to peripherals 1520 and 1521 via bus 1531. Access is also provided via bus 1531 to dedicated hardware 1522, which includes various devices and circuits, such as timers, power controls, debugging and emulation circuitry, and such. Interrupt request signals 1540 provide interrupt requests from devices 1520-1522 to DSP 100.

Internal cache 814 provides faster instruction access time for processor 100. Emulation circuitry 851 with JTAG interface 850 and benchmark circuitry 852 was described earlier. Cache miss signal 816 provides benchmark events which are recorded by benchmark circuitry 852. Window circuitry 824 provides window enable signal 825, as explained earlier.

Host processor 1510 is connected to host processor interface circuit (HPI) 1511 via bus 1533. HPI 1511 provides buffering and timing control to allow host processor 1510 to access communication memory circuit 1502 via bus 1532. In this manner, host processor 1510 can store and access data values in communication memory 1502 that can also be stored and accessed by DSP 100. Bus 1532 is separate from bus 1530 and communication memory 1502 is arranged such that host processor 1510 can access data values in dual ported memory circuit 1502 in a manner that does not impinge on the operation of memory circuit 812. Interrupt request signals 1541 provide interrupt requests from host processor 1510 to DSP 100.

Host Port Interface 1511 has two registers, an interrupt register 1512 for asserting interrupt requests and status register 1513 for the HPI operational modes. Both registers are accessible by host 1510 via bus 1533. Interrupt register 1512 is operable to assert host interrupt requests to processor 100 in response to a write transaction from host 1510.

In multiprocessing systems, such as system 1500, cache miss ratio is a key benchmark measure to monitor. Keeping the system running during benchmark monitoring with the use of embedded circuitry 850-852 is advantageous. Other sources of performance degradation, such as fetch bandwidth limitation, memory conflicts, and pipeline protection conflicts can also be monitored using benchmark circuitry 852.

Referring again to Figure 9, benchmark counter 910 is a 40-bit counter. As discussed earlier, it can be configured as a single 32-bit or 40 bit counter, or two 16-bit counters. Table 8 provides a description of how the counter is accessed via the 16-bit data bus of the present embodiment. This register's contents vary, depending on the setting of the ACU counter logic mode bits (ACNT_CNTL:CM). This register may be read to determine its current value, or written to initialize it. It is accessed from four different memory mapped addresses, referred to as ACNT0, ACNT1, ACNT2 and ACNT3, respectively. Table 8 also provides a description of various other registers that are associated with the benchmark register provided in this embodiment for emulation purposes. Emulation registers that are not within the CPU are memory mapped register (MMR). Note that all emulation registers in Table 8 exist in I/O space.

**Table 8 -**

| Benchmark / Watchpoint Circuitry Registers | | | | | |
|---|---|---|---|---|---|
| Name | Word Address | Byte Address | Size | Read/Write | Description |
| ACNT0 | 0x0430 | 0x0860 | 16 | R/W | Benchmark Counter Register (count 0 or lower 16 bits of 32 or 40 bit counter). |
| ACNT1 | 0x0431 | 0x0862 | 16 | R/W | Benchmark Counter Register (count 1 or upper 16 bits of 32 bit counter or lower 16 bits of 40 bit counter. |
| ACNT2 | 0x0432 | 0x0864 | 16 | R/W | Benchmark Counter Register (match 0 or lower 16 bits of 32 bit match register or upper 8 bits of 40 bit counter). |
| ACNT3 | 0x0433 | 0x0866 | 16 | R/W | Benchmark Counter Register (match 1 or upper 16 bits of 32 bit match register. |
| ACNT_ESEL | 0x0434 | 0x0868 | 16 | R/W | Benchmark Counter External Input Select Register |
| Reserved | 0x0435 | | | | |
| ACNT_CNTL | 0x0436 | 0x086C | 16 | R | Count ID Register |
| ACNT_ID | 0x0437 | 0x086E | | | |
| WP2_AMSKL | 0x0608 | 0x0C10 | 16 | R/W | Watch/Breakpoint Address Mask Register 1021 (lower 16 bits) |
| WP2_AMSKH | 0x0609 | 0x0C12 | 16 | R/W | Watch/Breakpoint Address Mask Register 1021 (upper 16 bits) |
| WP2_AREFL | 0x060A | 0x0C14 | 16 | R/W | Watch/Breakpoint Address Reference Register 1020 (lower 16 bits) |
| WP2_AREFH | 0x060B | 0x0C16 | 16 | R/W | Watch/Breakpoint Address Reference Register 1020 (upper 16 bits) |
| WP3_AMSKL | 0x0628 | 0x0C30 | 16 | R/W | Watch/Breakpoint Address Mask Register 1031 (lower 16 bits) |
| WP3_AMSKH | 0x0629 | 0x0C32 | 16 | R/W | Watch/Breakpoint Address Mask Register 1031 (upper 16 bits) |
| WP3_AREFL | 0x062A | 0x0C34 | 16 | R/W | Watch/Breakpoint Address Reference 1030 Register (lower 16 bits) |
| WP3_AREFH | 0x062B | 0x0C36 | 16 | R/W | Watch/Breakpoint Address Reference 1030 Register (upper 16 bits) |

Benchmark Counter Control Register (ACNT_CNTL) 940 controls the configuration of the benchmark counters. The main points of control being the number of counters, the configuration of the counter enable(s), and action, if any, to perform when the counter matches a reference value.

To access a function's registers, the control register must first be written to claim the resource. Ownership may be verified by reading the function's ID register. A read of an unowned resource returns a value of 0. A write to an unowned resource is ignored. Similarly, a read or write to a register, where the control register was not written to first, will not succeed. The control register ownership must be released after the function use is complete. Table 9 summarizes the bit assignments of this register.

**Table 9 -**

| Benchmark Counter Control Register (ACNT_CNTL) | | | | |
|---|---|---|---|---|
| Name | Size | Read/Write | | Description |
| ACNT_CNTL | 16 bits | | Benchmark Counter Control: | |
| | | | Bit 15: Reserved | |
| | | R | Bit 15: Reserved | |
| | | R/W | Bit 14-12: Counter 1 control | (CEN1) |
| | | R/W | Bit 11: Free run | (FREE1) |
| | | R/W | Bit 10: Event enable | (STOP1) |
| | | R/W | Bit 09-07: Counter 0 control | (CEN0) |
| | | R/W | Bit 06: Free run | (FREE0) |
| | | R/W | Bit 05: Event enable | (STOP0) |
| | | R/W | Bit 04-03: Counter mode | (CM) |
| | | R/W | Bit 02-00: ACU Counter state | (ACNT_STATE) |

### Benchmark Counter Control Register Bit Definitions

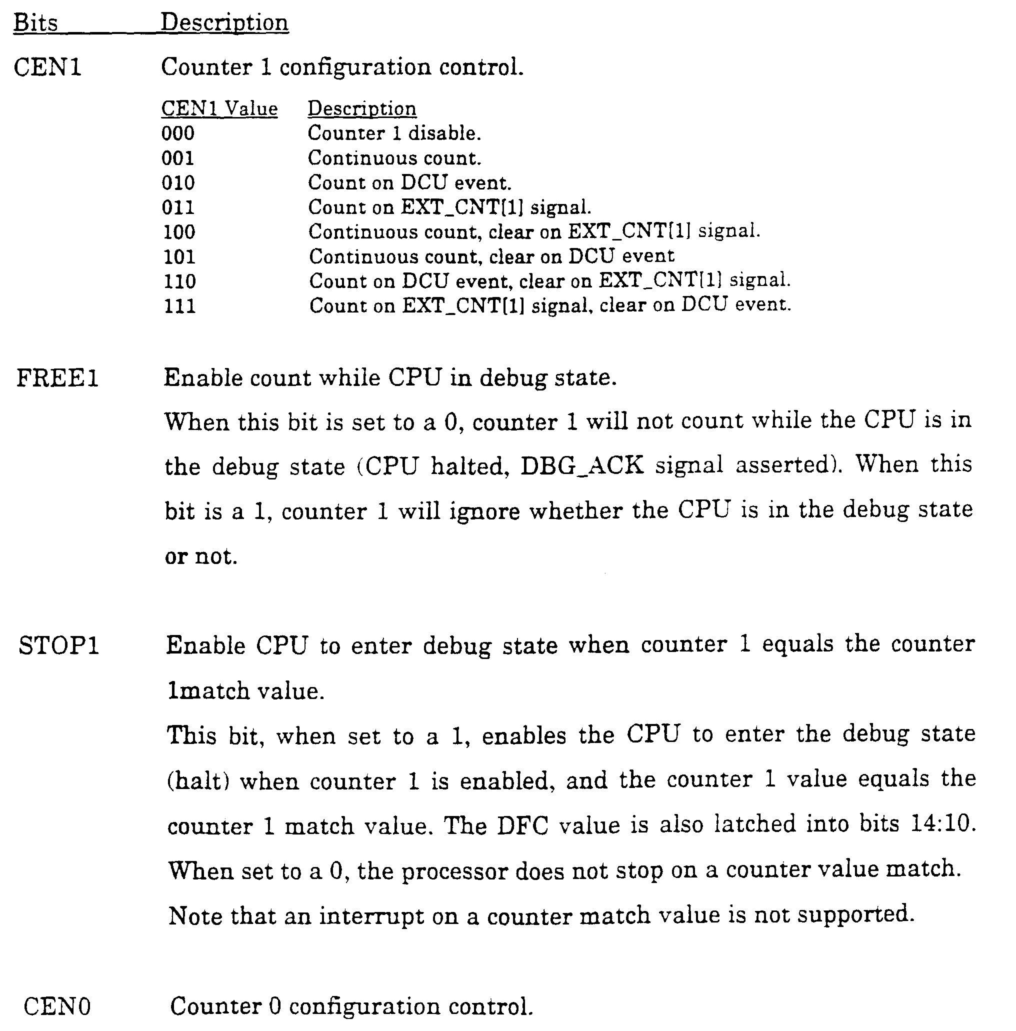

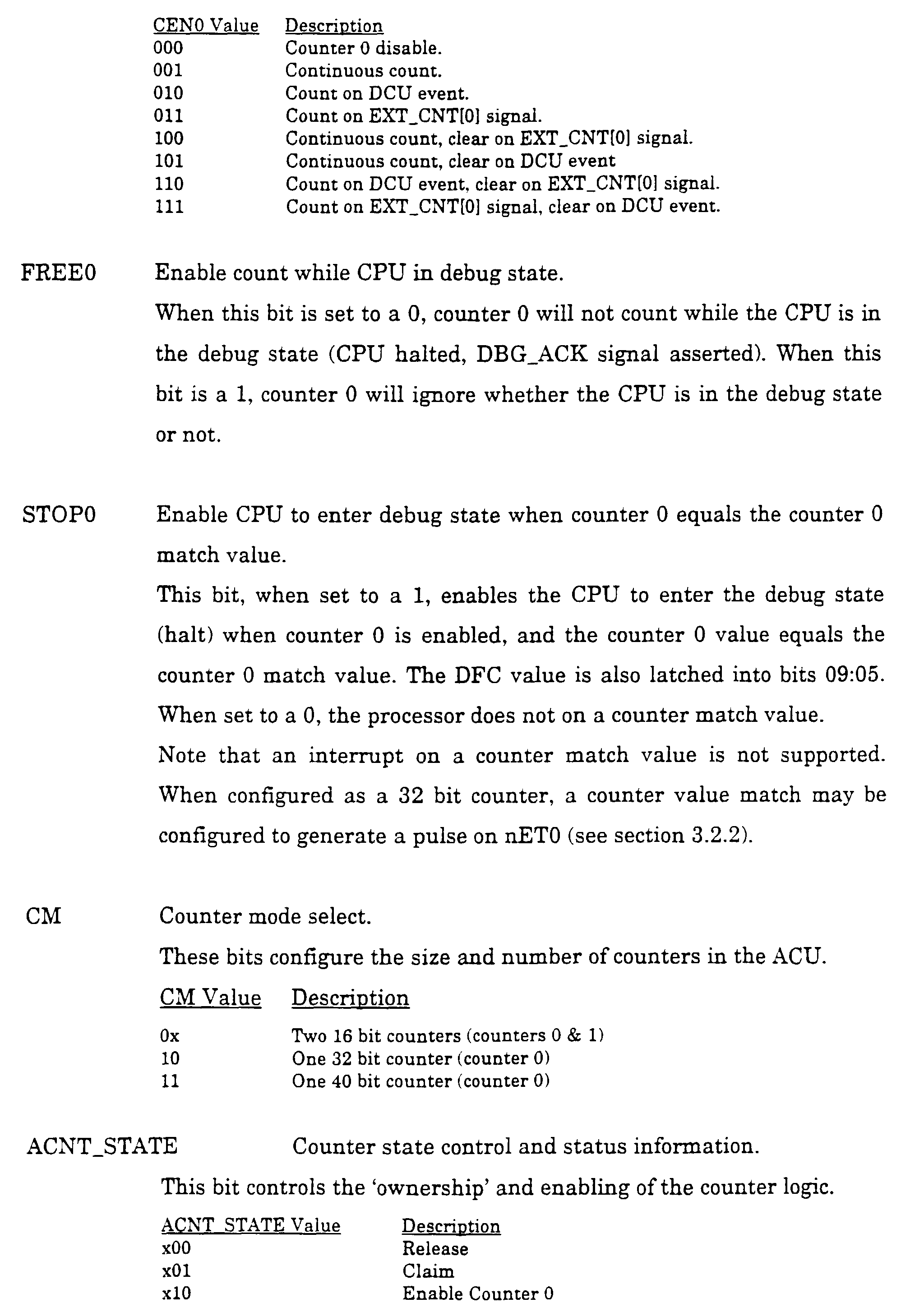

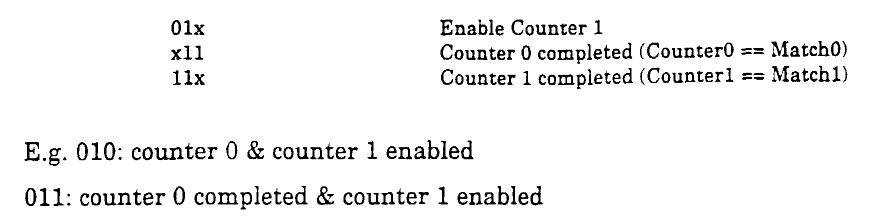

Benchmark Counter External Input Select Register (ACNT_ESEL) 930 specifies which external inputs will be selected to the EXT_CNT[0,1] signals 922a, 922b, and whether these signals should be gated by the an external qualifier. Table 10 summarizes the bit assignments of this register.

**Table 10 -**

| Benchmark Counter External Input Select Register (ACNT_ESEL) | | | | |
|---|---|---|---|---|
| Name | Size | Read/Write | Description | |
| ACNT_ESEL | 16 bits | | Event Select: | |
| | | R/W | Bit 15: EXT_CNT[1] external qualifier | (EQUAL1) |
| | | R | Bit 14-12: Reserved | |
| | | R/W | Bit 11-08: EXT_CNT[1] input select | (ESEL1) |
| | | R/W | Bit 07: EXT_CNT[0] external qualifier | (EQUAL0) |
| | | R | Bit 06-04: Reserved | |
| | | R/W | Bit 03-00: EXT_CNT[0] input select | (ESEL0) |

### ACU Benchmark Counter External Input Select Register Bit Definitions

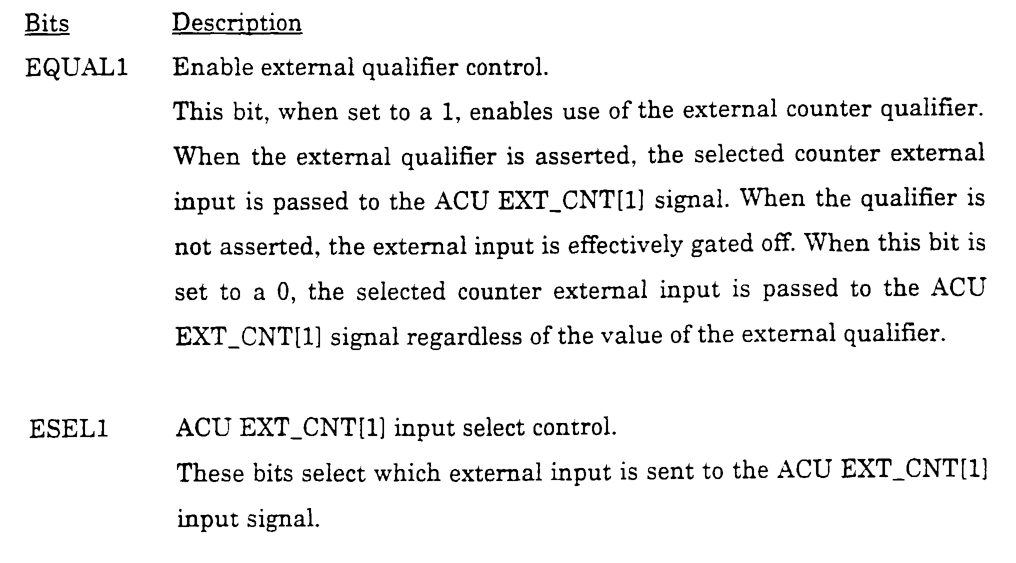

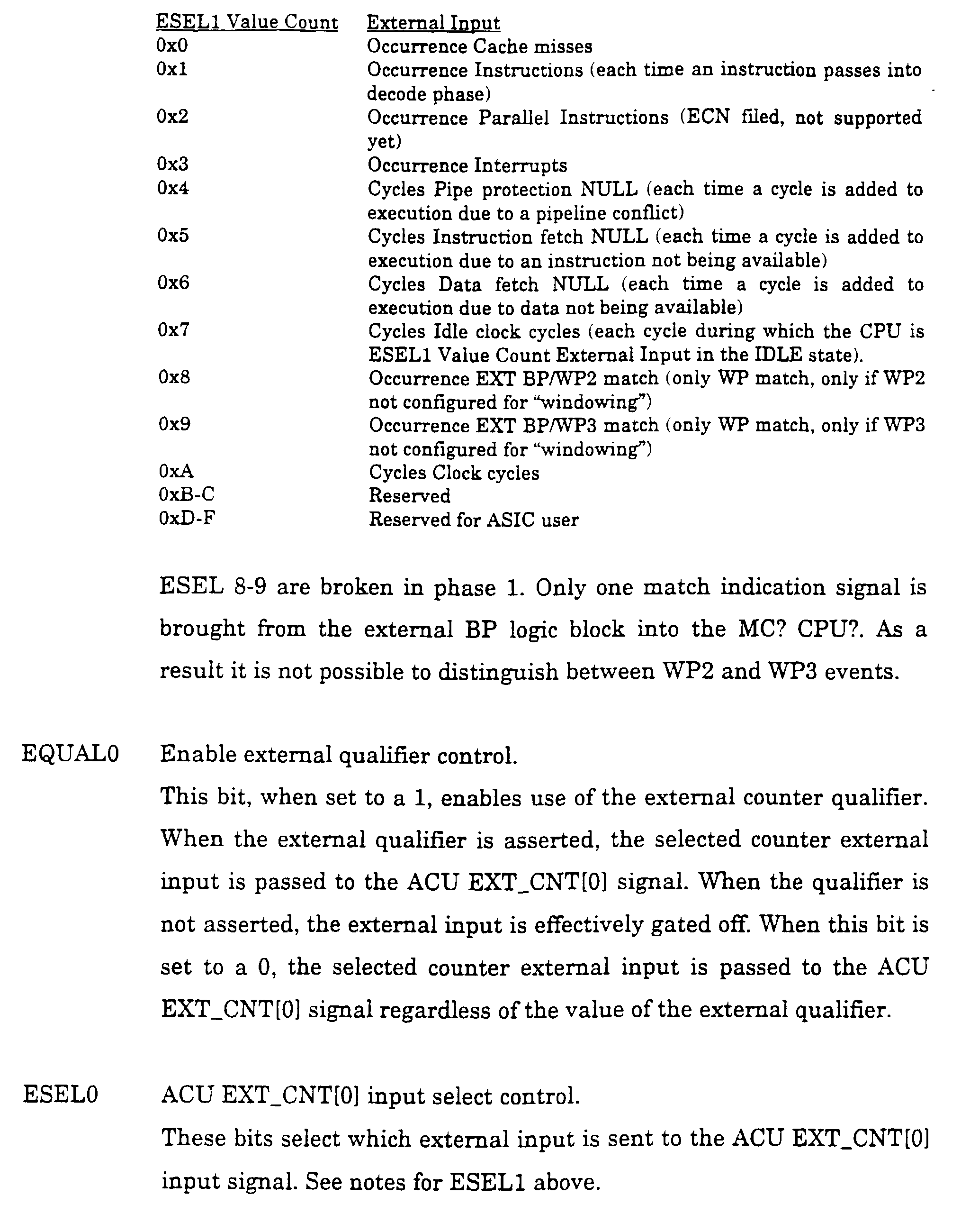

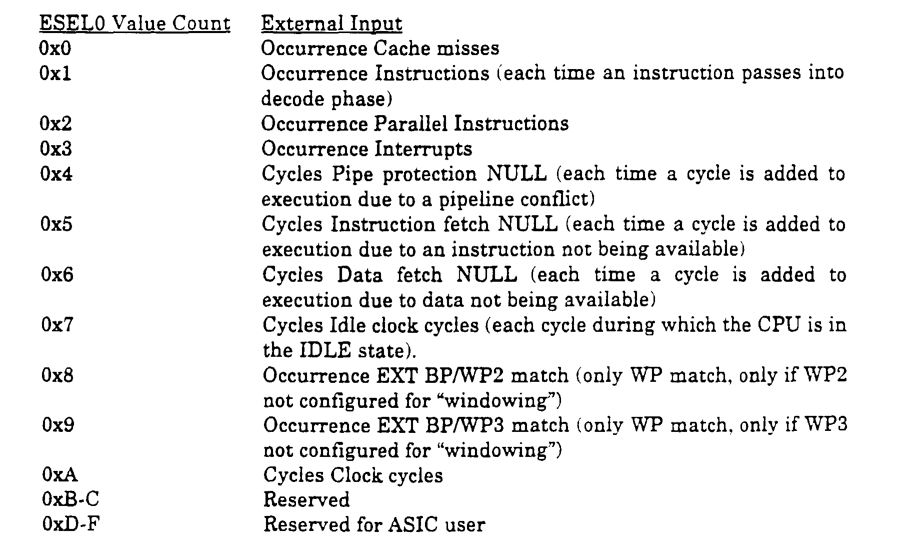

A Benchmark Counter ID Register (ACNT_ID) specifies the 'owner' identification of the ACU counter function. The owner of the counter logic may be the debugger, application, or no current owner. Table 11 summarizes the bit assignments of this register.

**Table 11 -**

| Benchmark Counter ID Register (ACNT_ID) | | | | |
|---|---|---|---|---|
| Name Size | | Read/Write Description | | |
| ACNT_ID | 16 bits | | Counter ID: | |
| | | R | Bit 15-14: Counter ID | (CNT_ID) |
| | | R | Bits 13-12: ACU_FUNC | (ACU_FUNC) |
| | | R | Bits 11-0: CTOOLs ID | (CTOOLS_ID) |

### Address Benchmark Counter ID Register Bit Definitions

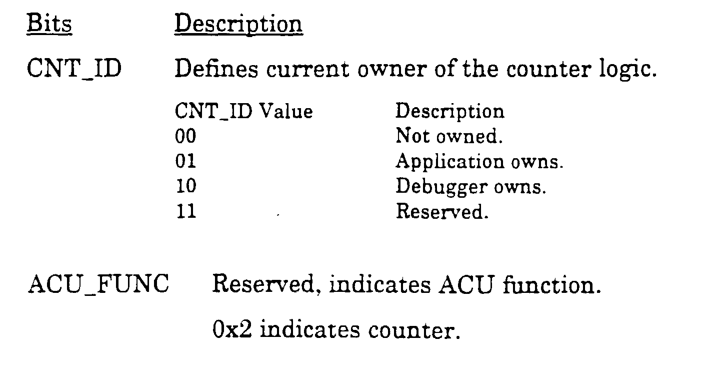

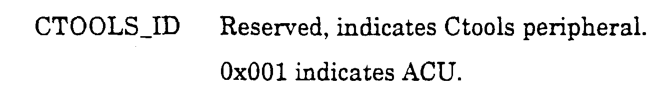

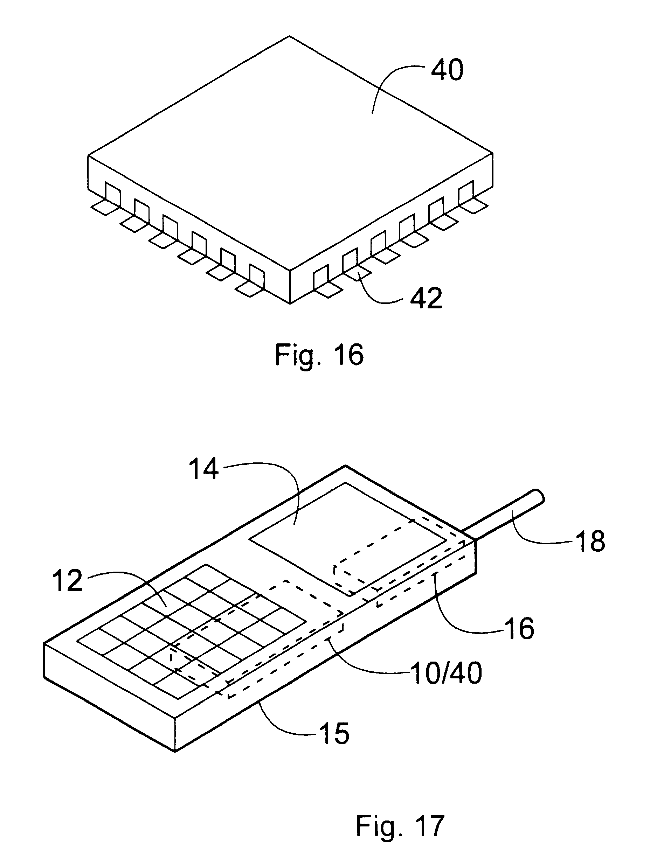

Figure 16 is a schematic representation of an integrated circuit incorporating processor 100. As shown, the integrated circuit includes a plurality of contacts for surface mounting. However, the integrated circuit could include other configurations, for example a plurality of pins on a lower surface of the circuit for mounting in a zero insertion force socket, or indeed any other suitable configuration.

Figure 17 illustrates an exemplary implementation of an example of such an integrated circuit in a mobile telecommunications device, such as a mobile telephone with integrated keyboard 12 and display 14. As shown in Figure 17, the digital system 10 with processor 100 is connected to the keyboard 12, where appropriate via a keyboard adapter (not shown), to the display 14, where appropriate via a display adapter (not shown) and to radio frequency (RF) circuitry 16. The RF circuitry 16 is connected to an aerial 18.

Fabrication of data processing device 100 involves multiple steps of implanting various amounts of impurities into a semiconductor substrate and diffusing the impurities to selected depths within the substrate to form transistor devices. Masks are formed to control the placement of the impurities. Multiple layers of conductive material and insulative material are deposited and etched to interconnect the various devices. These steps are performed in a clean room environment.

A significant portion of the cost of producing the data processing device involves testing. While in wafer form, individual devices are biased to an operational state and probe tested for basic operational functionality. The wafer is then separated into individual dice which may be sold as bare die or packaged. After packaging, finished parts are biased into an operational state and tested for operational functionality.

An alternative embodiment of the novel aspects of the present invention may include other circuitries which are combined with the circuitries disclosed herein in order to reduce the total gate count of the combined functions. Since those skilled in the art are aware of techniques for gate minimization, the details of such an embodiment will not be described herein.

An alternative embodiment can have more than one benchmark counter, or a different sized benchmark counter. Various types of benchmark events can be counted.

An alternative embodiment can have watchpoint circuitry connected to monitor other buses than the instruction address bus, such as a data bus for example, so that benchmarking could start or stop based an a data value, for example.

An alternative embodiment can have a cache with a different configuration, such as for example, one in which data is also cached along with instructions. Alternatively, additional caches can be embodied and benchmarked by providing a miss signal from each cache.

Thus, there has been described a processor that is a programmable digital signal processor (DSP), offering both high code density and easy programming. Architecture and instruction set are optimized for low power consumption and high efficiency execution of DSP algorithms, such as for wireless telephones, as well as pure control tasks. The processor includes an instruction buffer unit, and a data computation unit for executing the instructions decoded by the instruction buffer unit. Instructions can be executed in a parallel manner, either in response to implicit parallelism or in response to user defined parallelism. Furthermore, the microprocessor has a means for benchmarking cache miss performance of the internal cache, in addition to other performance related parameters. A better understanding of performance lost can therefore be determined from a quantitative analysis and a detailed breakdown of benchmark data. Global statistics and windowing can be used to pinpoint problem areas. This allows system bottlenecks to be identified. Instruction fetch bandwidth can then be improved by code-rescheduling, reworking parallelism, or re-mapping code.

Advantageously, monitoring can be performed without stopping the execution of code, so that the system environment, memory access conflicts and priorities are not changed.

As used herein, the terms "applied," "connected," and "connection" mean electrically connected, including where additional elements may be in the electrical connection path.

While the invention has been described with reference to illustrative embodiments, this description is not intended to be construed in a limiting sense. Various other embodiments of the invention will be apparent to persons skilled in the art upon reference to this description. It is therefore contemplated that the appended claims will cover any such modifications of the embodiments as fall within the true scope and spirit of the invention.

## Claims

1. A digital system comprising a microprocessor, wherein the microprocessor is operable to execute a sequence of instructions obtained from an instruction bus, wherein the microprocessor comprises:
an instruction buffer unit operable to decode a first instruction of the sequence of instructions;
program counter circuitry for providing a first instruction address that identifies the first instruction in the sequence of instructions to be decoded by the instruction buffer unit;
a cache circuit operable to store a copy of the first instruction, wherein the cache circuit is connected to the program counter circuitry and further connected to the instruction bus, the cache circuit being operable to provide the first instruction to the instruction buffer in response to the first instruction address from the program counter circuitry or to otherwise assert a miss signal if the first instruction is not stored in the cache;
counting circuitry operable to count a benchmark event each time the miss signal is asserted; and
watchpoint circuitry connected to the counting circuitry operable to enable and disable the counting circuitry.

2. The digital system of Claim 1, wherein the counting circuitry comprises control circuitry operable to select from a plurality of performance indicia signals for counting as a benchmark event, wherein the miss signal is one of the plurality of performance indicia signals.

3. The digital system according to any preceding Claim, wherein the watchpoint circuitry is connected to the program counter circuitry and is operable to enable the counting circuitry in response to a second instruction address provided by the program counter circuitry.

4. The digital system according to any preceding Claim, wherein the watchpoint circuitry is further operable to disable the counting circuitry in response to a third instruction address provided by the program counter circuitry.

5. The digital system according to any preceding Claim being a cellular telephone, further comprising:
an integrated keyboard (12) connected to the processor via a keyboard adapter;
a display (14), connected to the processor via a display adapter;
radio frequency (RF) circuitry (16) connected to the processor; and
an aerial (18) connected to the RF circuitry.

6. A method of operating a digital system comprising a microprocessor, wherein the microprocessor is operable to execute a sequence of instructions, comprising the steps of:
providing a first instruction address that identifies a first instruction in the sequence of instructions to be decoded by an instruction buffer unit;
accessing the first instruction from a cache circuit if the first instruction is present in the cache circuit or indicating that a cache miss event occurred if the first instruction is not present in the cache circuit and accessing the first instruction from another memory circuit;
decoding the first instruction of the sequence of instructions in the instruction buffer unit;
repeating the steps of providing, accessing and decoding to form a sequence of cache miss events; and
counting a selected set of benchmark events to determine a measure of performance of the digital system, wherein a benchmark event is a cache miss event.

7. The method of Claim 6, wherein the step of counting comprises beginning the step of counting in response to a first data value and stopping the step of counting in response to a second data value, such that the selected set of benchmark events occurs between the occurrence of the first data value and the occurrence of the second data value.

8. The method according to Claim 7, wherein the first data value is a first selected instruction address and the second data value is a second selected instruction address.

9. The method according to any of Claims 7-8, wherein the first data value is not an instruction address.

10. The method according to any of Claim 6-9, wherein an event other than a cache miss event is selected as a benchmark event.
